# EUROPEAN PATENT APPLICATION

(11) **EP 0 952 722 A1**
(43) Date of publication of application: **27.10.1999**
(21) Application number: 99440077.8
(22) Date of filing: 19.04.1999
(51) Int. Cl.: H04M 1/57, H04M 19/08

(54) **Line power arrangement for a telephone**

(30) Priority: 20.04.1998 AU PP306798
(71) Applicant: ALCATEL, 75008 Paris (FR)
(72) Inventor: Orr, Bruce, Balgowlah, New South Wales (AU)
(74) Representative: Müller, Joachim, Dipl.-Ing.

(57) **Abstract**

An arrangement for providing a calling line identification display device of a telephone, during on-hook mode, with power derived from incoming AC ring signals.

The arrangement comprises a rectifier to rectify the AC ring signals and whose rectified output voltage is applied to a "buck" switching regulator whose output provides a controlled voltage source for powering.

## Description

This invention relates to telephone subsets and other communication equipment having calling line identification (CLI) display means, and in particular to a line power arrangement for such equipment.
With the introduction of sophisticated public switching equipment that can provide services such as calling line identification, the on-hook power requirements of telephone subsets and other equipment connected to such public switching equipment has increased to a point where the current required to be bled from the exchange line to provide on-hook power, exceeds the limit, typically 50A, set by Telecom Authorities.

It is known to provide current to telephone subsets for on-hook functions by means of batteries or mains energized power-packs. A disadvantage in using batteries is that they require maintenance by the subscriber; another disadvantage is the environmental problem of disposing of used batteries. In the case of power-packs, a disadvantage is that an AC power outlet is required in the vicinity of the telephone; another disadvantage is the relatively high cost of power packs.

According to the invention, there is provided a communication equipment arrangement including line terminal means for connexion to an exchange via an exchange line, a receiver means for receiving caller line identification means and a display means, wherein said arrangement further includes a rectification means for rectifying AC ring signals generated at said exchange and applied to said line terminal means, and a switching regulator means whose input is coupled to an output of said rectification means, whereby a controlled voltage is produced at an output of said switching regulation means upon receipt of a AC ring signal, said controlled voltage being applied to a power input terminal means of said display means for powering said display means during the period the equipment is receiving said AC ring signals.

In order that the invention may be readily carried into effect, an embodiment thereof will now be described with reference to the accompanying drawings, in which:

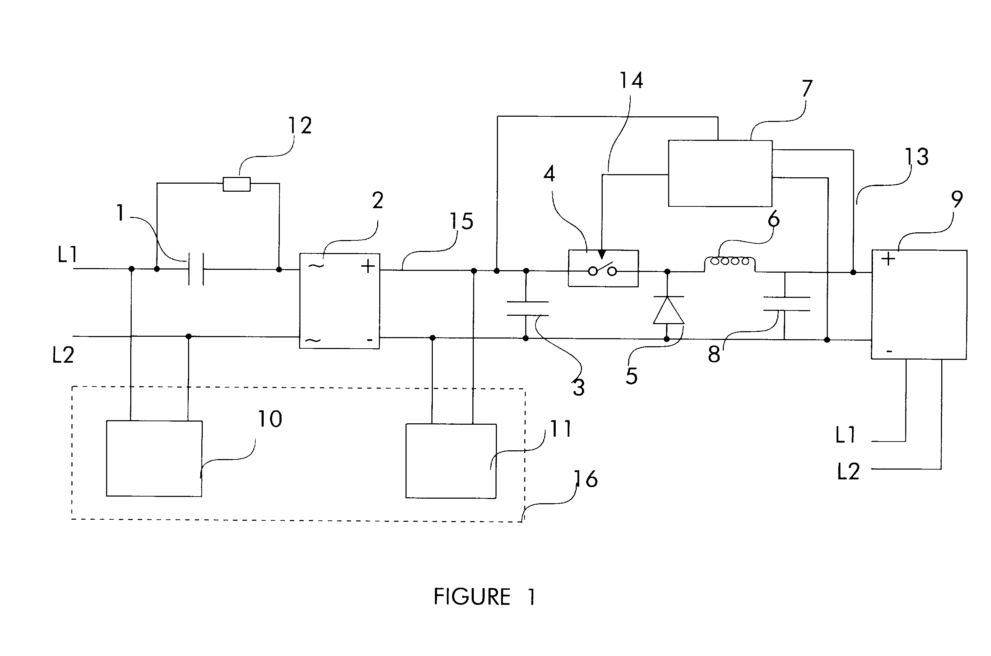

Figure 1 shows a schematic circuit of a converter arrangement incorporated in a telephone; and
Figure 2 shows a modification of the arrangement of Figure 1.

Referring to the figure, line connections L1, L2 of the telephone set are connected via a capacitor 1 to rectification means 2. The positive and negative outputs of the rectification means 2 are connected to capacitor 3. The positive output of the rectification means is also connected to switching means 4 and pulse width modulator (PWM) means 7. Switching means 4 is controlled by PWM means 7. The output of switching means 4 is connected to an inductor 6 and a diode means 5. The output of inductor 6 is connected to capacitor 8 and CLI demodulator and display means 9.

Switching means 4, diode means 5, inductor 6 and capacitor 8 form a switching "buck" converter. The PWM 7 samples the output voltage at node 13 and uses this voltage for feedback control of a pulse width control signal outputted at node 14. A controlled voltage for powering of the CLI display means 9 is produced at node 13.

At the input of the converter the voltage may be typically 9.0V, and at the output thereof the voltage may be typically 3.3V. This allows approximately three times more current to be delivered to the output compared to that consumed at the input.

CLI display means 9 also has line connections to L1 and L2 for the purpose of receiving the modulated VF CLI signal from the line.

Resistor 12 provides a bypass path for a small amount of DC current, that may be used for standby power for the PWM and/or CLI display module 9. This resistor would normally be of high ohmic value.

In this embodiment where the CLI display function is combined with a normal telephone function, a telephone interface circuit 10 and alerting (ringer) circuit 11 is added. In this case, capacitor 1 and rectifier means 2 are shared by alerting circuit 11 and the CLI display means.

In an alternative embodiment of the invention not incorporating a normal telephone function, block 10 and 11 are deleted.

In a further alternative embodiment where the CLI display function is combined with a normal telephone set function, the first ring burst may be muted by switching off alerting circuit 11. This makes more of the power contained in the first ring burst available to be stored in capacitor 8 for use by the CLI demodulator and display means 9.

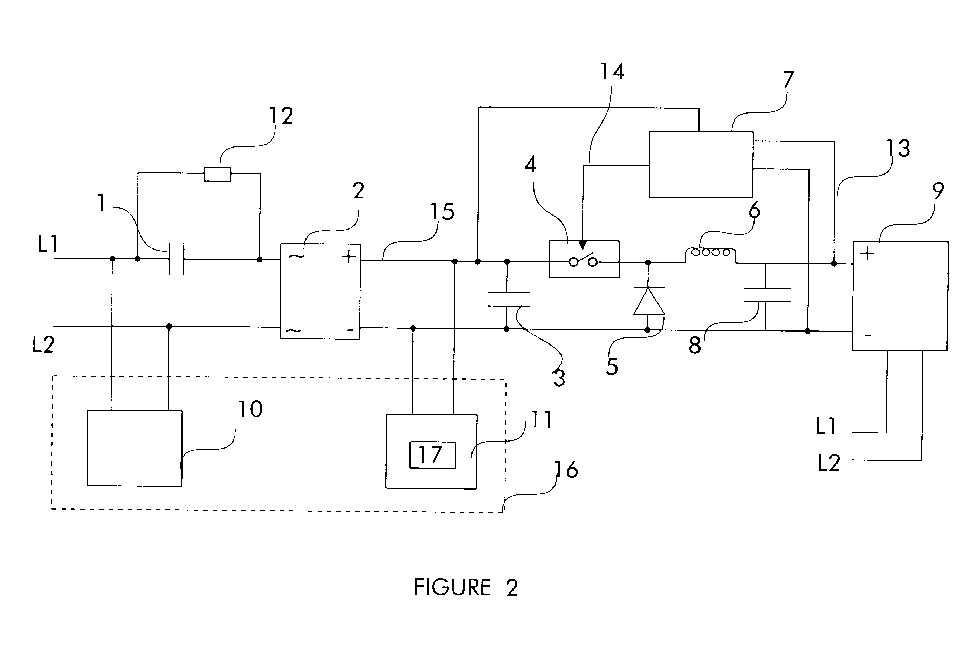

In the embodiment shown in Figure 2, control means 17 associated with ringer 11 senses the onset of ring signal and inhibits current flow into the ringer until after the first burst of ring signal.

## Claims

1. A caller identification arrangement including line terminal means for connexion to an exchange via an exchange line, a receiver means for receiving caller identification signals and a display means, wherein said arrangement further includes a rectification means for rectifying AC ring signals generated at said exchange and applied to said line terminal means, and a switching regulator means whose input is coupled to an output of said rectification means, whereby a controlled voltage is produced at an output of said switching regulation means upon receipt of a AC ring signal, said controlled voltage being applied to a power input terminal means of said display means for powering said display means while the AC ring signals are present.

2. An arrangement as claimed in claim 1, wherein said switching regulator means is a switching regulator.

3. An arrangement as claimed in claim 1 or claim 2 including ringer means responsive to the presence of ring signals to generate an alert signal, and control means to inhibit the flow of ring signal current to the ringer means during a first period when ring signals are present, and to enable the flow of ring signal current to the ringer means for the remainder of the duration of the ring signal.

4. An arrangement substantially as herein described with reference to the figure of the accompanying drawing.
